# EUROPÄISCHE PATENTSCHRIFT

(11) **EP 1 557 231 B1**
(45) Veröffentlichungstag und Bekanntmachung des Hinweises auf die Patenterteilung: **15.07.2009**
(21) Anmeldenummer: 04029148.6
(22) Anmeldetag: 09.12.2004
(51) Int. Cl.: B23D 59/00

(54) **Kappsäge mit Staubfangvorrichtung**
Chop saw with dust catching device
Scie pivotante avec collecteur de poussière

(30) Priorität: 22.01.2004 DE 202004000983 U
(43) Veröffentlichungstag der Anmeldung: 27.07.2005
(73) Patentinhaber: Metabowerke GmbH, 72622 Nürtingen (DE)
(72) Erfinder: Bergmann, Laurenz, 49733 Haren / Ems (DE)
(74) Vertreter: Gesthuysen, von Rohr & Eggert

(56) Entgegenhaltungen:
- DE-A1- 10 036 426
- DE-B1- 2 347 256
- JP-U- 3 108 401
- JP-U- 3 112 301
- US-A- 2 399 239
- US-A- 5 927 171
- PATENT ABSTRACTS OF JAPAN Bd. 1996, Nr. 02, 29. Februar 1996 (1996-02-29) -& JP 07 276302 A (RYOBI LTD), 24. Oktober 1995 (1995-10-24)

## Beschreibung

Die Erfindung betrifft eine Kappsäge mit Staubfangvorrichtung, mit den Merkmalen des Oberbegriffs von Anspruch 1. Eine solche Kappsäge ist aus dem Dokument EP 1 266 720 A2 bekannt.

Kappsägen der in Rede stehenden Art sind seit Jahrzehnten bekannt (DE 197 31 436 A1; EP 1 266 720 A2). Sie werden zur Bearbeitung aller Arten von Werkstoffen eingesetzt. Ein besonderes Anwendungsfeld finden derartige Kappsägen bei der Holzbearbeitung. Das schließt nicht aus, daß die Lehre der vorliegenden Erfindung für Kappsägen anderer Einsatzgebiete, insbesondere für die Kunststoffbearbeitung und Metallbearbeitung, Anwendung finden kann.

Eine Kappsäge hat zunächst ein um eine Querachse schwenkbar angebrachtes Sägeaggregat, dessen Sägeblatt aus einer angehobenen Ruhestellung in eine abgesenkte Sägestellung und umgekehrt schwenkbar ist. Mit dieser Bewegung des Sägeblatts kann ein auf einer Werkstückauflagefläche befindliches Werkstück abgeschnitten - gekappt - werden.

Kappsägen der in Rede stehenden Art sind meistens so ausgestattet, daß sie auch Gehrungsschnitte ausführen können. Dazu befindet sich dann die Werkstückauflagefläche ganz oder zum Teil an einem auf einem Träger angebrachten, um eine Hochachse drehbar gelagerten Werkstückauflagetisch, an dessen Rand eine Halterung für das Sägeaggregat angebracht ist. Der Werkstückauflagetisch kann gegenüber dem Träger mit daran vorzugsweise angebrachter Anlageschiene für das Werkstück nach rechts und links gedreht werden. So läßt sich ein Werkstück nicht nur in einem Winkel von 90°, sondern beispielsweise auch in einem Winkel von 45° ablängen (Gehrungsschnitt).

Ferner sind Kappsägen häufig mit einer weiteren Schwenkmöglichkeit ausgestattet, nämlich dergestalt, daß die Halterung eine Neigungsanordnung aufweist, mit der das Sägeaggregat gegenüber dem Träger bzw. der Werkstückauflagefläche um eine im wesentlichen rechtwinklig zur Querachse verlaufende, in der oder parallel zu der Ebene der Werkstückauflagefläche liegende Längsachse schwenkbar ist. Das erlaubt Gehrungsschnitte in einer senkrecht zur vorher beschriebenen Ebene liegenden Ebene und Doppel-Gehrungsschnitte (Schifterschnitte).

Es ist auch bekannt, Kapp- und Gehrungssägen mit einer Zugfunktion zu versehen. Eine Zugfunktion in Längsrichtung führt dazu, daß die Schnittlänge beim Kappsägen länger ist als es sich aus dem Durchmesser des Sägeblattes ergibt. Das Sägeblatt durchtrennt das Werkstück nicht nur infolge der Schwenkbewegung um die Querachse, sondern auch noch infolge einer Verschiebebewegung senkrecht zur Querachse, also in Längsrichtung. Das sind dann kombinierte Kapp-, Gehrungs- und Zugsägen. Diese sind besonders bekannt mit einem Werkstückauflagetisch kleinen Durchmessers, der in Längsrichtung einen Auslegerarm mit darin verlaufendem Eintauchschlitz aufweist.

Allen oben beschriebenen und auch weiteren denkbaren Varianten von Kappsägen ist gemeinsam, daß bei Durchführung des Sägevorgangs eine erhebliche Menge an Sägespänen bzw. -staub entsteht, die sich auf dem in Bearbeitung befindlichen Werkstück, der in Betrieb befindlichen Kappsäge und der gesamten näheren Arbeitsumgebung niederlegt. Das Sägeblatt rotiert dabei in einer vorgegebenen, unveränderlichen Drehrichtung, wobei die gegeneinander verschränkten Sägezähne Späne aus dem Werkstück losschneiden, die dann durch die als Zahnlücken bezeichneten Hohlräume zwischen den hintereinander angeordneten Sägezähnen aus dem Sägeschlitz transportiert werden. Die Sägespäne verlassen dabei das Sägeblatt in einem vergleichsweise groß aufgefächerten Zerstreuungswinkel, wobei die Hauptauswurfrichtung durch eine Tangente an die Stelle des Sägeblatts definiert wird, an der das Sägeblatt mit dem Werkstück in Berührung kommt und an der der Materialabtrag maßgeblich zustande kommt bzw. an der das Sägeblatt das Werkstück verläßt. Das nicht in der oben beschriebenen Hauptauswurfsrichtung aus dem Sägeschlitz herausgeschleuderte Material wird hauptsächlich in der durch das Sägeblatt definierten Raumebene zerstreut, aber in geringerem Ausmaß auch abweichend von dieser Ebene.

Neben dem grundsätzlich unerwünschten Effekt der Verunreinigung der Arbeitsumgebung erschwert oder verhindert die massive Ablagerung von Sägespänen auf dem zu bearbeitenden Werkstück vor allem aber die optische Kontrolle des Sägevorgangs, was sich unter Umständen nachteilig auf die Arbeitsökonomie und -sicherheit auswirkt.

Diesem Mangel wird im bekannten Stand der Technik durch verschiedene Maßnahmen begegnet, insbesondere durch Wegblasen und/oder Absaugen der Sägespäne von/aus dem Bereich des Sägeschnitts.

Bekannt ist insoweit ein Staubsammelsystem für Gehrungssägen (DE 100 36 426 A1), bei dem ein Kollektor an dem Sägeaggregat befestigt ist und in der Sägeposition der Gehrungssäge in eine Aussparung des Werkstückauflagetisches fest eingreift und damit an fester, unveränderlicher Position den in der Nähe des Kollektors befindlichen Sägestaub aufsaugen kann.

Bekannt ist auch eine Kreissäge mit verbessertem Staubfang (DE 197 31 436 A1), bei der eine in die Halterung des Sägeaggregats integrierte Staubfangdüse das Sägeblatt radial von außen nach innen gerichtet teilweise umschließt und somit vor allem den mit dem Sägeblatt mitgetragenen Sägestaub auffängt, ohne jedoch das Werkstück an sich in besonderer Weise von Sägestaub freihalten zu können.

Bei anderen bekannten Lösungen ist eine Staubfangvorrichtung nicht an dem schwenkbaren Sägeaggregat befestigt, sondern an dem Träger oder dem gegebenenfalls drehbaren Werkstückauflagetisch und zwar so, daß die Öffnung der Staubfangvorrichtung in geringer Höhe über dem Werkstückauflagetisch, allerdings in einiger Entfernung von dem Sägeblatt selbst angeordnet ist (siehe z. B. Metabo Gesamtkatalog 2003/2004, Kapp- und Gehrungssäge vom Typ KGS 16-300 oder KGS E 1670 S-Signal).

Die beschriebenen Konstruktionen sind zwar dazu geeignet, den in einiger Entfernung weggeschleuderten Sägestaub aufzusammeln und abzuleiten, jedoch ist die Staubsammelfähigkeit in der Nähe des Sägeschnitts aufgrund der vergleichsweise großen Entfernung von der Stelle des eigentlichen Zerspanungsvorgangs nur beschränkt.

Einen Ansatz zur Verbesserung der Staubsammelfähigkeit in der Nähe des Werkstücks offenbart die Kappsäge mit Staubfangvorrichtung (EP 1 266 720 A2) von der die Erfindung ausgeht. Hier weist ein am Gehäuse des schwenkbaren Sägeaggregats befestigter Staubfang eine untere Staubfangklappe aus elastischem Material auf. Die Staubfangklappe ist unmittelbar hinter dem Sägeblatt vorgesehen, und liegt bei einem genügend hohen Werkstück gegebenenfalls auf diesem Werkstück auf. Ein möglicher Nachteil der beschriebenen Ausführung liegt unter anderem darin, daß eine leicht bewegliche und flexible Staubfangklappe, die dort vorzugsweise aus gummiertem Gewebe, wie z. B. neoprenbeschichtetem Nylon besteht, einerseits erheblichem Verschleiß ausgesetzt ist. Überdies kann die Wirkung einer angeschlossenen Absaugvorrichtung dadurch eingeschränkt werden, daß gegenüberliegende Seiten der Staubfangklappe bei Berührung mit dem Werkstück nicht voneinander weg sondern aufeinander zu klappen und so die Saugleistung erheblich vermindern. Schließlich kann der durch eine Absaugvorrichtung erzeugte Luftstrom selbst dazu führen, daß sich die flexiblen Wände der Staubfangklappe einander annähern und die Staubfangöffnung verschließen. Wenn dem (wie in der EP 1 266 720 A2 vorgeschlagen) durch eine Versteifung der Staubfangklappe durch eine Drahtschlaufe entgegengewirkt wird, kann sich die Staubfangklappe nicht mehr dem Werkstück in geeigneter Weise anpassen, so daß der Vorteil der ursprünglich flexiblen Klappenkonstruktion verloren geht.

Der Lehre der vorliegenden Erfindung liegt das Problem zugrunde, eine Kappsäge mit einer Staubfangvorrichtung so auszugestalten und weiterzubilden, daß die Staubsammelwirkung insbesondere in der Nähe des Sägeschnitts verbessert und die oben beschriebenen Nachteile vermieden werden.

Die zuvor aufgezeigte Problemstellung ist gelöst bei einer Kappsäge mit den Merkmalen des Oberbegriffs von Anspruch 1 durch die Merkmale des kennzeichnenden Teils von Anspruch 1.

Voraussetzung für die Verwirklichung der Lehre ist lediglich die Funktion der Kappsäge. Gehrungsfunktion, Schifterfunktion und Zugfunktion können jeweils vorhanden sein, müssen dies aber nicht.

Der Grundgedanke der Erfindung liegt darin, daß eine an einem Sägeaggregat der Kappsäge angebrachte Staubfangvorrichtung zumindest teilweise und zumindest an ihrer Staubeinlaßseite derart beweglich ausgestattet ist, daß eine in der Staubeinlaßseite vorgesehene Staubeinlaßöffnungen sowohl in Nähe des zu bearbeitenden Werkstücks wie auch in Nähe des Sägeblatts und damit der Zerspanungsstelle positioniert werden kann. Dabei besteht der beschriebene bewegliche Teil der Staubeinlaßseite, in dem die Staubeinlaßöffnung vorgesehen ist, erfindungsgemäß aus biegesteifem Material, das den erhöhten Festigkeitsanforderungen aufgrund des möglichen Kontakts mit dem Werkstück und aufgrund der mit hoher Geschwindigkeit eingetragenen bzw. eingesogenen Sägespäne gerecht wird.

Darüber hinaus hat die biegesteife Ausführung des beweglichen Teils der Staubeinlaßseite nicht nur den Vorteil erhöhter Verschleißfestigkeit sondern auch den Vorzug, daß eine unbeabsichtigte Verengung der Staubeinlaßöffnung oder der gesamten Staubeinlaßseite durch Knick- oder Saugwirkung nicht möglich ist.

Der bewegliche Teil der Staubfangvorrichtung ist in der Ebene beweglich gelagert, die durch das Sägeblatt definiert wird. Diese Beweglichkeit gestattet es, die Staubeinlaßseite bzw. die in ihr vorgesehene Staubeinlaßöffnung jeweils so zu positionieren, daß sie hinter dem Sägeblatt im direkten Auswurfbereich der Zerspanungsstelle - also der Berührungslinie von Sägeblatt und Werkstück - und gleichzeitig in der Nähe des zu bearbeitenden Werkstücks zu liegen kommt.

Der bewegliche Teil der Staubfangvorrichtung berührt während des Absenkens des Sägeaggregats und während des Eindringens des Sägeblatts in das Werkstück die Werkstückoberfläche und gibt folglich der absenkenden Bewegung des Sägeaggregats nach. Dabei ist es, je nach Konstruktion des beweglichen Teils der Staubfangvorrichtung möglich, daß die Auflagefläche,-kante oder -stelle der Staubeinlaßseite auf dem Werkstück sich bei der oben beschriebenen Arbeitsbewegung des Sägeaggregats und Sägeblatts auf der Werkstückoberfläche verschiebt. Um den einer solchen Relativbewegung zwischen der Staubeinlaßseite der Staubfangvorrichtung und der Werkstückoberfläche entgegenwirkenden Widerstand zu verringern, ist im Bereich der potentiellen Auflagestelle der Staubeinlaßseite der Staubfangvorrichtung ein Gleit- oder Rollelement vorgesehen, das ein leichtes Gleiten oder Rollen der Staubeinlaßseite der Staubfangvorrichtung auf dem Werkstück unterstützt. Dies ist insbesondere dann von Vorteil, wenn die Kappsäge nicht nur eine vertikale Arbeitsbewegung ausführt, sondern auch eine Horizontalbewegung, wie sie fünktionsnotwendig mit einer erweiterten Verwendung der Kappsäge als Zugsäge einhergeht.

Im einzelnen gibt es nun mehrere Möglichkeiten, die erfmdungsgemäße Kappsäge auszugestalten und weiterzubilden. Dazu wird verwiesen sowohl auf die dem Anspruch 1 nachgeordneten Ansprüche als auch auf die Beschreibung von in der Zeichnung dargestellten Ausführungsbeispielen der erfindungsgemäßen Kappsäge. In der Zeichnung zeigen
- Fig. 1: eine schematische Seitenansicht einer erfindungsgemäßen Kappsäge,
- Fig. 2: eine perspektivische Darstellung der Staubfangvorrichtung der erfindungsgemäßen Kappsäge,
- Fig. 3: eine Seitenansicht der erfindungsgemäßen Staubfangvorrichtung in Anlehnung an Fig. 2 in Richtung der Staubeinlaßseite.

Für die vorliegend geschilderte Problemlösung ist Voraussetzung lediglich das Vorhandensein einer Kappsäge. Die im Stand der Technik bekannte Säge, die den Ausgangspunkt für die Lehre der vorliegenden Erfindung bildet, ist eine kombinierte Kapp- und Zugsäge. Auch das Ausführungsbeispiel der erfindungsgemäßen Kappsäge ist eine solche universell ausgestaltete Säge. Das ändert nichts daran, daß dies keine zwingende Voraussetzung für die Verwirklichung der Lehre ist.

Dargestellt ist das Sägen von Holz, nämlich eines Holzbrettes als Werkstück bzw. das Absaugen von Holzspänen, die als solche nicht dargestellt sind. Die im allgemeinen Teil der Beschreibung einleitend genannten anderen Materialien sind aber ebenso zu bearbeiten, sofern ein entsprechendes, zum Material passendes Sägeblatt verwendet wird.

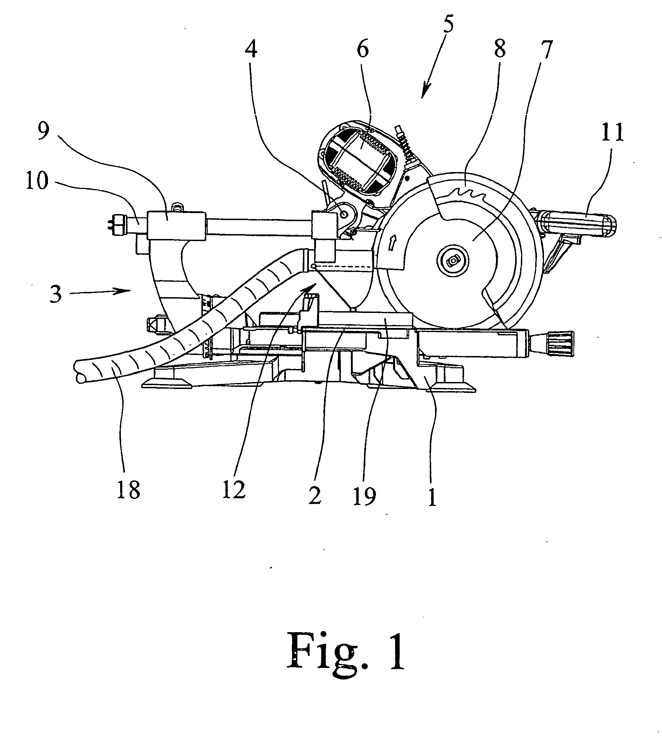

Die in Fig. 1 dargestellte Kappsäge weist zunächst einen Träger 1 auf, der an der Oberseite eine Werkstückauflagefläche 2 bildet. Am Träger 1 ist eine Halterung 3 eingebracht. Oberhalb des Trägers 1 ist an der Halterung 3 um eine Querachse 4 schwenkbar angebracht ein Sägeaggregat 5 mit einem Antriebsmotor 6 und einem Sägeblatt 7, das über ein nicht dargestelltes Getriebe von dem Antriebsmotor 6 angetrieben wird. Das Sägeblatt 7 wird durch eine Schutzhaube 8 geschützt. Zusätzlich zu der Schwenkbewegung, die das Sägeaggregat 5 um die Querachse 4 ausführen kann, ist es darüber hinaus möglich, das Sägeaggregat 5 linear in der Horizontalen zu bewegen. Dabei wird die Bewegungsrichtung durch eine am oberen Ende der Halterung 3 angeordnete Führung 9 für eine oder mehrere Zugstangen 10 festgelegt. Durch Ausüben von Kräften auf den Betätigungsgriff 11 können die beschriebenen Bewegungen des Sägeaggregats 5 veranlaßt werden.

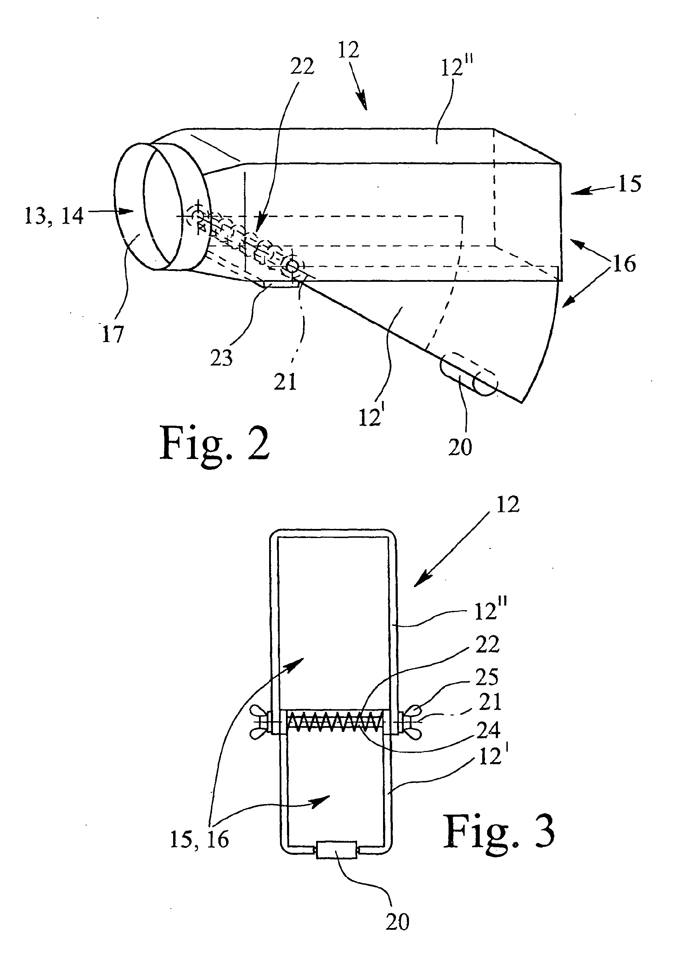

An dem Sägeaggregat 5 ist eine Staubfangvorrichtung 12 montiert, die in Fig. 2 als separate Baugruppe im ausgebauten Zustand dargestellt ist. Die Staubfangvorrichtung 12 weist an ihrer Staubauslaßseite 13 eine Staubauslaßöffnung 14 und an ihrer Staubeinlaßseite 15 eine Staubeinlaßöffnung 16 auf. Staubauslaßöffnung 14 wird vorzugsweise durch einen Anschlußstutzen 17 gebildet, an den ein in Fig. 1 dargestellter Absaugschlauch 18 anbringbar ist, der üblicherweise mit einer hier nicht dargestellten Absaugvorrichtung in Verbindung steht, die einen starken, von der Staubeinlaßseite 15 zur Staubauslaßseite 13 gerichteten Luftstrom erzeugt.

Wesentlich für das in den Fig 1 bis 3 dargestellte bevorzugte Ausführungsbeispiel ist, daß die Staubfangvorrichtung 12 an der Staubeinlaßseite 15 biegesteif ausgeführt ist, um eine ungewünschte, den Strömungsquerschnitt verengende Deformation der Staubfangvorrichtung 12, insbesondere der Staubeinlaßseite 15 bzw. der Staubeinlaßöffnung 16 zu verhindern

Wie die Fig. 1 bis 3 zeigen, ist die Staubfangvorrichtung 12 teilweise beweglich ausgebildet, wobei die größte Beweglichkeit in Richtung der Staubeinlaßseite 15 gegeben ist. Fig. 1 zeigt, daß die Staubfangvorrichtung 12 mit ihrer Staubeinlaßöffnung 16, direkt im Auswurfbereich des Sägeblatts 7 angeordnet ist, also in unmittelbarer Nähe der Berührungsstelle des rotierenden Sägeblatts 7 mit dem zu zerteilenden Werkstück 19 und zwar in der Ebene, die durch das Sägeblatt 7 selbst definiert wird. In dieser Ebene läßt sich der bewegliche Teil 12' der Staubfangvorrichtung 12 bewegen.

Die beschriebene Staubfangvorrichtung 12 kann dabei als separat erkennbare Baugruppe der Kappsäge ausgestaltet sein, oder aber auch mit der Kappsäge, insbesondere mit dem Sägeaggregat 5, eine integrale Einheit bilden. Dabei läßt sich die erfindungsgemäße Konstruktion auch mit aus dem Stand der Technik bekannten Absaugvorrichtungen kombinieren, indem ein Teil des über die Staubfangvorrichtung 12 abgesogenen Luftstroms grundsätzlich Staubpartikel erfaßt, die in die Schutzhaube 8 des Sägeblatts 7 eingetragen werden und ein weiterer Teil des Luftstroms durch den beweglichen Teil der Staubfangvorrichtung 12 geleitet wird. In Fig. 2 sind diese beiden Luftstrompfade bzw. -öffnungen angedeutet, wobei die obere Staubeinlaßöffnung 16 über den feststehenden Teil 12" der Staubfangvorrichtung 12 den unter der Schutzhaube 8 befindlichen Sägestaub absaugt und die untere Staubeinlaßöffnung 16 über den beweglichen Teil 12' der Staubfangvorrichtung 12 für das Absaugen des Sägestaubs auf dem Werkstück 19 bzw. im Bereich des Sägeschnitts zuständig ist.

Aufgrund der freien Beweglichkeit der Staubfangvorrichtung 12 bzw. des Teils 12' der Staubfangvorrichtung 12 ist es nunmehr möglich, insbesondere die Staubeinlaßöffnung 16 der Staubeinlaßseite 15 während des gesamten Sägevorgangs in der Nähe des Werkstücks 19 und des Sägeblatts 7 und damit im direkten Auswurfsbereich der Sägespäne zu positionieren.

Der bewegliche Teil 12' der Staubfangvorrichtung 12 befindet sich im unbelasteten Zustand, also z. B. in der Ruhestellung der Kappsäge mit angehobenem Sägeblatt 7, in einer weitestmöglich ausgelenkten Position bezüglich des unter ihm. befindlichen Werkstücks 19. Beim Absenken des Sägeaggregats 5 nähern sich Sägeblatt 7 und der bewegliche Teil 12' der Staubfangvorrichtung 12 dem Werkstück 19, wobei der bewegliche Teil 12' der Staubfangvorrichtung 12 vorzugsweise früher als das Sägeblatt 7 das Werkstück 19 kontaktiert. Beim Eindringen des Sägeblatts 7 in das Werkstück 19 nähert sich das Sägeaggregat 5 inklusive der Staubfangvorrichtung 12 immer näher dem Werkstück 19 an und der in der Ebene des Sägeblatts 7 bewegliche Teil 12' der Staubfangvorrichtung 12 bzw. der Staubeinlaßseite 15 der Staubfangvorrichtung 12 wird durch den von dem Werkstück 19 ausgeübten Gegendruck im wesentlichen vertikal hochgedrückt.

Der in den Fig. 1 bis 3 dargestellte bewegliche Teil 12' der Staubeinlaßseite 15 hat in der Seitenansicht - dargestellt in den Fig. 1 und 2 - den Querschnitt eines Kreissegments und berührt ein im wesentlichen unprofiliertes Werkstück 19 mit einer Kante. Diese Kante ist vorzugsweise mit einem Rollelement 20 versehen, das das Verschieben des beweglichen Teils 12' der Staubeinlaßseite 15 auf der Oberfläche des Werkstücks 19 erleichtert. Bei der in den Fig. 1 bis 3 dargestellten drehbaren Lagerung des beweglichen Teils 12' der Staubfangvorrichtung 12 resultiert eine solche Relativbewegung bereits aus der im wesentlichen vertikalen Bewegung des Sägeaggregats 5 und damit der Staubfangvorrichtung 12 beim Eindringen des Sägeblatts 7 in das Werkstück 19. Das in allen Figuren als Laufrolle dargestellte Gleit- oder Rollelement 20 verhindert somit ein mögliches Verkeilen des beweglichen Teils 12' der Staubfangvorrichtung 12 mit dem Werkstück 19 bei Absenken des Sägeaggregats 5 in die Sägestellung.

Aufgrund der aus Fig. 1 ersichtlichen Anordnung von Sägeblatt 7 und Staubfangvorrichtung 12 zueinander ist es bei bestimmungsgemäßer Verwendung der Kappsäge nicht möglich, daß das Gleit- oder Rollelement 20 in den Sägeschnitt des Werkstücks 19 eindringt oder sich in diesem verklemmt. Dennoch sollte das Gleit- oder Rollelement 20 bevorzugt so ausgeführt werden, daß eine solche Verklemmung grundsätzlich nicht möglich ist, insbesondere also auch nicht bei einer Verwendung der Kappsäge, die nicht bestimmungsgemäß ist. Dies kann insbesondere gewährleistet werden, indem das Gleit- oder Rollelement 20 breiter ausgeführt wird als die durch die Dicke des Sägeblatts 7 bestimmte Schnittbreite. Darüber hinaus ist das Gleit- oder Rollelement 20 insbesondere so breit, daß es auch nicht in den - nicht dargestellten - Eintauchschlitz des Werkstückauflagetisches für das Sägeblatt 7 geraten und dort möglicherweise verklemmen kann.

Die in den Fig. 1 bis 3 dargestellte bevorzugte Ausführungsform einer Kappsäge und insbesondere der Staubfangvorrichtung 12 weist den Vorteil auf, daß die Staubfangvorrichtung 12 die Distanz zwischen Werkstück und Sägeaggregat an der späneauswerfenden Seite des Sägeblatts 7 nicht nur während des vollständigen, im wesentlichen vertikal ausgeführten Sägevorgangs schließt und absaugt (Kappsägefunktion), sondern auch bei horizontal ausgeführter Schnittrichtung, also bei Verwendung der Säge als Zugsäge, und sogar dann, wenn das Werkstück 19 erheblich profiliert ist. In diesem Fall wird der bewegliche Teil 12' der Staubfangvorrichtung 12 durch die von dem profilierten Werkstück 19 ausgeübten Kräfte um die Schwenkachse 21 nach oben geschwenkt. Die Schwenkachse 21 muß nicht als gegenständliche, durchgängige Achse ausgeführt sein, sondern sie kann beispielsweise auch durch zwei Lagerpunkte oder Achsstummel gebildet werden.

Um sicher zu gehen, daß der bewegliche Teil 12' der Staubfangvorrichtung 12 bündig auf dem Werkstück 19 aufliegt, - was bei hinreichend leichtgängiger Lagerung allein schon durch Schwerkraftwirkung gewährleistet wäre -, wird der bewegliche Teil der Staubfangvorrichtung 12 vorzugsweise mittels Federkraft in seine untere Position, also in Richtung auf das Werkstück 19 gedrückt. In dem Ausführungsbeispiel nach Fig. 2 und 3 wird diese Kraft durch eine vorgespannte, in Position der Schwenkachse 21 befindliche Torsionsfeder 22 verwirklicht, die ein Drehmoment auf den beweglichen Teil 12' der Staubfangvorrichtung 12 ausübt, das der von dem Werkstück 19 herrührenden Drehmomentwirkung entgegengerichtet ist. Ein in Fig. 2 schematisch angedeuteter, verstellbarer Anschlag 23, der z. B. an dem nicht beweglichen Teil der Staubfangvorrichtung 12 verstell- und fixierbar angeordnet ist, wirkt als Barriere für die Schwenkbewegung des beweglichen Teils 12' der Staubfangvorrichtung 12 und verhindert somit ein unkontrolliertes und unerwünscht weites Aufklappen des in Fig. 2 dargestellten beweglichen Teils der Staubfangvorrichtung 12. Ähnliche Lösungen sind sinngemäß auch auf die anderen Ausführungsbeispiele anwendbar.

Fig. 3 zeigt eine luftansaugseitige Ansicht der Staubfangvorrichtung 12 nach Fig. 2 mit einer Gewindestange 24 und Flügelmuttern 25.

Das in den Fig. 2 und 3 dargestellte Ausführungsbeispiel zeichnet sich dadurch aus, daß der schwenkbare Teil 12' der Staubfangvorrichtung 12 in den feststehenden Teil 12" der Staubfangvorrichtung 12 einschwenkt, was im dargestellten Fall möglich ist, da die Breite der kanalförmig ausgebildeten Staubfangvorrichtung 12 ein inwandiges Einschwenken gestattet, ohne die Luftströmung innerhalb der Staubfangvorrichtung 12 wesentlich zu beeinflussen.

## Patentansprüche

1. Kappsäge mit
einem Träger (1), der eine Werkstückauflagefläche (2) bildet,
einer am Träger (1) angebrachten Halterung (3),
einem oberhalb des Trägers (1) an der Halterung (3) um eine Querachse (4) schwenkbar angebrachten Sägeaggregat (5) mit einem Antriebsmotor (6)
einem Sägeblatt (7), einer das Sägeblatt (7) schützenden Schutzhaube (8) und einer am Sägeaggregat (5) angebrachten Staubfangvorrichtung (12),
wobei das Sägeaggregat (5) um die Querachse (4) aus einer Ruhestellung mit angehobenem Sägeblatt (7) in eine Sägestellung mit abgesenktem Sägeblatt (7) und umgekehrt schwenkbar ist,
wobei die Staubfangvorrichtung (12) an einer Staubauslaßseite (13) mindestens eine Staubauslaßöffnung (14) und an einer Staubeinlaßseite (15) mindestens eine einer staubauswerfenden Seite des Sägeblatts (7) zugewandte Staubeinlaßöffnung (16) aufweist, und
wobei ein beweglicher Teil (12') der Staubfangvorrichtung (12) mit der Staubeinlaßöffnung (16) in der Sägestellung des Sägeblattes (7) von selbst auf dem Werkstück (19) aufliegt und bei einer Relativbewegung zwischen Sägeblatt (7) und Werkstück (19) der Kontur des Werkstücks (19) folgt,
**dadurch gekennzeichnet,**
**daß** die Staubfangvorrichtung (12) an der Staubeinlaßseite (15) aus biegesteifem Material besteht,
**daß** die Staubfangvorrichtung (12) einen feststehenden Teil (12") und den an dem feststehenden Teil (12") um eine Schwenkachse (21) schwenkbar angeordneten, im wesentlichen in der durch das Sägeblatt (7) definierten Raumebene beweglichen Teil (12') aus biegesteifem Material aufweist und die Staubeinlaßöffnung (16) von dem der Schwenkachse (21) fernen Ende des beweglichen Teils (12') mit dem entsprechenden Ende des feststehenden Teils (12") gebildet ist,
**daß** der bewegliche Teil (12') gegenüber dem feststehenden Teil (12") stets um die Schwenkachse (21) frei beweglich ist.

2. Kappsäge nach Anspruch 1, **dadurch gekennzeichnet,**
**daß** die maximale Auslenkung des beweglichen Teils (12') der Staubfangvorrichtung (12) an der Staubeinlaßseite (15) durch einen verstellbaren Anschlag (23) einstellbar ist.

3. Kappsäge nach Anspruch 1 oder 2, **dadurch gekennzeichnet,**
**daß** der bewegliche Teil (12') der Staubfangvorrichtung (12) an der Staubeinlaßseite (15) mindestens ein Gleit- oder Rollelement (20) aufweist, das in der Sägestellung des Sägeaggregats (5) auf dem Werkstück (19) gleitet oder rollt.

4. Kappsäge nach einem der Ansprüche 1 bis 3, **dadurch gekennzeichnet, daß** der bewegliche Teil (12') in einer eingeschwenkten Position von dem feststehenden Teil (12") der Staubfangvorrichtung (12) im wesentlichen umgeben wird oder den feststehenden Teil (12") der Staubfangvorrichtung (12) im wesentlichen umgibt.

5. Kappsäge nach einem der Ansprüche 1 bis 4, **dadurch gekennzeichnet, daß** der bewegliche Teil (12') der Staubfangvorrichtung (12) in die ausgeschwenkte Position vorgespannt ist, insbesondere durch ein Federelement.

## Claims

1. Mitre saw comprising
a support (1) which forms a work rest surface (2),
a retainer (3) attached to the support (1),
a saw unit (5) which is attached above the support (1) to the retainer (3) such as to be pivotable about a transverse axis (4) and has a drive motor (6),
a saw blade (7),
a guard (8) protecting the saw blade (7),
a dust catching device (12) attached to the saw unit (5),
wherein the saw unit (5) can be pivoted about the transverse axis (4) from a rest position with raised saw blade (7) into a sawing position with lowered saw blade (7) and vice versa,
wherein the dust catching device (12) has at least one dust outlet opening (14) on a dust outlet side (13) and at least one dust inlet opening (16) on a dust inlet side (15), said dust inlet opening (16) facing a dust-discharging side of the saw blade (7), and wherein a movable part (12') of the dust catching device (12), with the dust inlet opening (16), rests automatically on the workpiece (19) in the sawing position of the saw blade (7) and follows the contour of the workpiece (19) during a relative movement between saw blade (7) and workpiece (19),
**characterized**
**in that** the dust catching device (12) is made of flexurally stiff material on the dust inlet side (15),
**in that** the dust catching device (12) has a fixed part (12") and the part (12') made of flexurally stiff material, which is arranged on the fixed part (12") such as to be pivotable about a pivot axis (21) and is movable essentially in the spatial plane defined by the saw blade (7), and the dust inlet opening (16) is formed by the end of the movable part (12') remote from the pivot axis (21) together with the corresponding end of the fixed part (12"),
and **in that** the movable part (12') is always freely movable about the pivot axis (21) relative to the fixed part (12").

2. Mitre saw according to Claim 1, **characterized in that** the maximum deflection of the movable part (12') of the dust catching device (12) on the dust inlet side (15) can be set by an adjustable stop (23).

3. Mitre saw according to Claim 1 or 2, **characterized**
**in that** the movable part (12') of the dust catching device (12) on the dust inlet side (15) has at least one sliding or rolling element (20) which slides or rolls on the workpiece (19) in the sawing position of the saw unit (5).

4. Mitre saw according to one of Claims 1 to 3, **characterized in that** the movable part (12'), in a swung-in position, is essentially surrounded by the fixed part (12") of the dust catching device (12) or essentially surrounds the fixed part (12") of the dust catching device (12).

5. Mitre saw according to one of Claims 1 to 4, **characterized in that** the movable part (12') of the dust catching device (12) is preloaded in the swung-out position, in particular by a spring element.

## Revendications

1. Scie pivotante, comprenant :
un support (1) qui forme une surface d'appui de pièce (2),
une fixation (3) montée sur le support (1),
une unité de scie (5) montée pivotante autour d'un axe transversal (4) au-dessus du support (1) sur la fixation (3), avec un moteur d'entraînement (6), une lame de scie (7), un capot de protection (8) protégeant la lame de scie (7) et
un dispositif collecteur de poussière (12) monté sur l'unité de scie (5),
l'unité de scie (5) pouvant pivoter autour de l'axe transversal (4) d'une position de repos avec la lame de scie (7) relevée à une position de sciage avec la lame de scie (7) abaissée et inversement,
le dispositif collecteur de poussière (12) présentant, sur un côté de sortie de poussière (13) au moins une ouverture de sortie de poussière (14), et sur un côté d'entrée de poussière (15) au moins une ouverture d'entrée de poussière (16) tournée vers un côté de la lame de scie (7) expulsant de la poussière,
une partie mobile (12') du dispositif de collecte de poussière (12) reposant avec l'ouverture d'entrée de poussière (16) dans la position de sciage de la lame de scie (7) d'elle-même sur la pièce (19), et en cas de mouvement relatif entre la lame de scie (7) et la pièce (19), suivant le contour de la pièce (19),
**caractérisée**
**en ce que** le dispositif de collecte de poussière (12) sur le côté d'entrée de poussière (15) se compose d'un matériau rigide en flexion,
**en ce que** le dispositif de collecte de poussière (12) présente une partie fixe (12") et la partie mobile (12') en matériau rigide en flexion disposée sur la partie fixe (12") de manière à pouvoir pivoter autour d'un axe de pivotement (21), essentiellement dans le plan spatial défini par la lame de scie (7), et l'ouverture d'entrée de poussière (16) est formée par l'extrémité éloignée de l'axe de pivotement (21) de la partie mobile (12') avec l'extrémité correspondante de la partie fixe (12"),
et **en ce que** la partie mobile (12') est toujours librement mobile par rapport à la partie fixe (12").

2. Scie pivotante selon la revendication 1, **caractérisée en ce que** la déviation maximale de la partie mobile (12') du dispositif de collecte de poussière (12) du côté d'entrée de poussière (15) peut être ajustée par une butée réglable (23).

3. Scie pivotante selon la revendication 1 ou 2, **caractérisée en ce que** la partie mobile (12') du dispositif de collecte de poussière (12) présente du côté d'entrée de poussière (15) au moins un élément de glissement ou de roulement (20) qui glisse ou roule sur la pièce (19) dans la position de sciage de l'unité de scie (5).

4. Scie pivotante selon l'une quelconque des revendications 1 à 3, **caractérisée en ce que** la partie mobile (12') est essentiellement entourée dans une position rentrée par pivotement par la partie fixe (12") du dispositif de collecte de poussière (12), ou entoure essentiellement la partie fixe (12") du dispositif de collecte de poussière (12).

5. Scie pivotante selon l'une quelconque des revendications 1 à 4, **caractérisée en ce que** la partie mobile (12') du dispositif de collecte de poussière (12) est précontrainte dans la position sortie par pivotement, en particulier par un élément de ressort.
